Europäisches Patentamt

European Patent Office

Office européen des brevets

(19)

(11) Numéro de publication : **0 124 387**
**B1**

# (12) FASCICULE DE BREVET EUROPÉEN

(45) Date de publication du fascicule du brevet :
27.07.88

(51) Int. Cl.⁴ : **B 29 D 3/02**

(21) Numéro de dépôt : 84400522.3

(22) Date de dépôt : 14.03.84

(54) **Procédé et dispositif pour la fabrication de panneaux composites.**

(30) Priorité : 17.03.83 FR 8304358

(43) Date de publication de la demande :
07.11.84 Bulletin 84/45

(45) Mention de la délivrance du brevet :
27.07.88 Bulletin 88/30

(84) Etats contractants désignés :
AT BE CH DE FR GB IT LI LU NL SE

(56) Documents cités :
DE-A- 1 453 374
FR-A- 1 090 209
FR-A- 1 192 477
FR-A- 1 565 075
GB-A- 1 097 844
JP-A-56 037 373
US-A- 3 200 181

(73) Titulaire : ISOVER SAINT-GOBAIN
Les Miroirs 18, avenue d'Alsace
F-92400 Courbevoie (FR)

(72) Inventeur : Brossy, Pierre
32 rue du Maréchal de Lattre de Tassigny
F-71100 Chalon sur Saone (FR)
Inventeur : Pichard, Marcel
7 rue de l'Hotel Guéhain
F-60140 Bailleval (FR)

(74) Mandataire : Muller, René et al
SAINT-GOBAIN RECHERCHE 39, quai Lucien Lefranc
F-93304 Aubervilliers (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne des panneaux composites moulés d'épaisseur variable comprenant une couche à base de fibres liées et une feuille de revêtement, tels des panneaux acoustiques présentant au moins une partie épaisse absorbant les bruits et d'autres parties notamment les bords, rigides et minces servant notamment à leur montage. Plus particulièrement, l'invention concerne un procédé et un dispositif pour la fabrication de ces panneaux.

Les panneaux composites de ce type sont par exemple des baffles, des paravents, fixes, amovibles ou mobiles qui peuvent être suspendus au plafond, constituer des parois etc..., des sous-capot ou des garnitures intérieures de pavillons de véhicule à moteur.

Ces panneaux composites sont fabriqués par moulage à partir d'un primitif c'est à dire une couche ou matelas de fibres imprégnées d'un liant non polymérisé, généralement une résine thermodurcissable, le primitif étant revêtu sur au moins un côté d'une feuille de revêtement conférant au produit final des caractéristiques désirées, par exemple un aspect esthétique, cette feuille de revêtement étant liée à la couche de fibres au cours de l'opération en une seule passe de moulage par pressage, en même temps que se réalise la polymérisation du liant.

Un des problèmes rencontrés dans la fabrication en une seule passe par moulage des panneaux composites du type décrit ci-dessus réside dans la difficulté d'obtenir une polymérisation rapide, complète et homogène aussi bien dans la partie épaisse absorbante à faible densité de fibres que dans les autres parties et notamment les bords minces à densité de fibres élevée.

En effet dans un moulage classique par pressage, le chauffage du composite est réalisé par un chauffage par conduction, dû au contact du moule et du contre-moule chauffés, ce qui nécessite une durée de moulage importante pour la partie épaisse, durée qui n'est pas nécessaire et éventuellement même nuisible pour les bords minces. Pour remédier à ce problème on a déjà proposé par exemple dans le document JP-A 56 037 373, décrivant un procédé et un dispositif selon le préambule des revendications 1 et respectivement 14 de souffler de l'air chaud à travers le feutre durant le moulage, de sorte que la chaleur nécessaire à la polymérisation est apportée rapidement au centre du feutre et la durée de l'opération est alors réduite.

Un autre problème rencontré dans la fabrication de panneaux composites à épaisseur variable par moulage et non résolu par le document cité ci-dessus est la conformation correcte du panneau au profil du moule, notamment lorsque celui-ci présente des angles vifs et/ou des zones à fortes courbures et des variations d'épaisseur importantes.

Jusqu'à présent les procédés de moulage connus, en particulier du document JP-A 56 037 373, ne permettent pas de fabriquer des panneaux composites et notamment des panneaux acoustiques présentant simultanément un bel aspect, un profil constant d'un panneau à l'autre, notamment pour les formes à fortes courbures, des épaisseurs importantes pour la partie absorbante, tout en utilisant une durée de pressage minimale et compatible avec une réalisation industrielle, par exemple d'environ 2 minutes et moins.

L'invention obvie aux inconvénients cités et propose un procédé permettant la fabrication industrielle de tels panneaux composites.

Conformément à l'invention, le procédé de fabrication par moulage d'un panneau composite à épaisseur variable dans lequel on presse entre un moule et un contre-moule, un ensemble stratifié comprenant un matelas de fibres contenant un liant non polymérisé et au moins une feuille de revêtement d'aspect, on conforme l'ensemble stratifié au profil du moule et du contre-moule, on souffle de l'air chaud dans l'ensemble stratifié, se caractérise en ce que :

— on conforme l'ensemble stratifié au profit du moule ou du contre-moule par application de la feuille de revêtement d'aspect et la partie adjacente du primitif contre le profit du moule ou du contre-moule correspondant à la face du panneau qui sera visible ultérieurement.

— on souffle de l'air chaud au moins dans la partie épaisse de l'ensemble stratifié, l'air chaud entrant du côté opposé à la feuille de revêtement.

— on modifie le soufflage pour régulariser l'apport thermique nécessaire à une polymérisation homogène et accélérée du liant.

— tout en chauffant par contact les parties denses et minces de l'ensemble stratifié.

La phase de conformation de l'ensemble stratifié et la première phase de soufflage peuvent être confondues notamment lorsque le soufflage de l'air chaud selon l'invention est un soufflage traversant, c'est-à-dire que l'air chaud entre du côté opposé à la feuille de revêtement, traverse le stratifié et ressort du côté de la feuille de revêtement.

La modification du soufflage que l'on désigne encore par deuxième phase de soufflage consiste alors, en une inversion du premier sens de soufflage.

Dans une variante la phase de conformation de l'ensemble stratifié consiste en une mise sous pression de l'ensemble stratifié par introduction d'air dans le moule et en empêchant au moins partiellement cet air de s'échapper.

La première phase de soufflage d'air chaud peut aussi consister en un soufflage semi-traversant, l'air chaud étant introduit par des orifices prévus dans le moule ou le contre-moule, du côté opposé à la feuille de revêtement, et l'air s'échappant du même côté par d'autres orifices. La modification du soufflage peut alors consister en une inversion des orifices, les orifices de sortie utilisés dans la première phase de soufflage devenant orifices d'entrée de l'air chaud et les orifices d'entrée utilisés dans la première phase devenant orifices de sortie.

D'autres combinaisons de soufflage traversant ou semi-traversant peuvent également être envisagées.

L'inversion du sens de soufflage présente encore un avantage car il peut dans le cas d'un soufflage traversant faciliter le démoulage ultérieur de panneau composite.

Au cours du moulage, on peut modifier éventuellement plusieurs fois le soufflage, à condition de commencer par la première phase de soufflage décrite précédemment. Ainsi dans le cas d'un soufflage traversant, on commence à souffler de l'air chaud, dans un sens tel que cet air entre du côté opposé à la feuille de revêtement, puis on inverse une première fois ce sens et éventuellement on peut l'inverser une deuxième fois.

Généralement, on se contente de modifier et notamment d'inverser une seule fois le sens du soufflage durant toute l'opération de pressage.

La durée totale de l'opération de moulage est généralement inférieure à 2 mn 30. Les durées de chacune des phase de soufflage peuvent varier, la première phase de soufflage confondue éventuellement avec la phase de conformation devant cependant avoir une durée suffisante pour figer la forme du panneau. Par exemple pour une durée totale de pressage de 90 secondes, on peut dans le cas d'un soufflage traversant souffler d'abord dans le sens vers la feuille de revêtement pendant 60 secondes, puis dans l'autre pendant 30 secondes.

Les températures de l'air chaud soufflé peuvent varier sensiblement en fonction des températures nécessaires à une polymérisation rapide du liant et des températures supportées par la feuille de revêtement. On utilise généralement des températures comprises entre 150 °C et 300 °C. Le débit de l'air soufflé peut être de l'ordre de 1 000 à 10 000 m³/heure, mesurés dans les conditions normales, selon les dimensions et la masse volumique du panneau. Les vitesses de l'air soufflé peuvent être de l'ordre de 0,1 à 10 m/s.

Pour la mise en œuvre de l'invention, dans le cas de panneaux acoustiques utilisés dans le bâtiment présentant une symétrie leur permettant d'être utilisés dans des positions diverses et de ce fait ayant leurs deux faces revêtues d'une feuille de revêtement dite d'aspect, on fabrique deux demi-panneaux que l'on réunit ensuite.

La réalisation de ces deux demi-panneaux peut être décalée dans le temps, mais avantageusement, on réalise ces demi-panneaux simultanément au cours d'une même opération de moulage. Les conditions opératoires sont alors identiques et les deux demi-panneaux présentent les mêmes caractéristiques mécaniques et d'aspect.

Selon un développement avantageux du procédé selon l'invention, on réalise les deux demi-panneaux à partir d'un même primitif et d'une même feuille de revêtement, et pour faciliter l'opération de réunion ultérieure des deux demi-panneaux, on garde une liaison entre-eux au cours du moulage, cette liaison faisant ensuite office de charnière.

L'invention s'applique donc particulièrement avantageusement à la fabrication d'un panneau composite à épaisseur variable tel un panneau acoustique, présentant une symétrie par rapport à son plan principal, une épaisseur totale comprise entre 60 et 150 mm, constitué par la réunion de deux demi-panneaux pouvant présenter une forme interne creuse plus ou moins accentuée, formés à partir d'un primitif en fibres contenant un liant revêtu d'une feuille de revêtement d'aspect perméable à l'air.

Selon un autre développement avantageux du procédé selon l'invention, les panneaux ou demi-panneaux sont découpés aux dimensions définitives au cours du moulage et avantageusement les bords sont scellés ou sertis au cours de cette même opération.

Le primitif utilisé dans le cadre de l'invention peut être à base de fibres de verre, de roche, de laitier ou de toutes autres fibres qui résistent aux températures de moulage. Le liant contient une résine qui est généralement une résine thermodurcissable telle une résine phénoplaste ou aminoplaste. De préférence, on utilise une résine phénoplaste qui présente une bonne tenue aux températures relativement élevées nécessaires pendant le moulage qui peuvent être de l'ordre de 150 à 300 °C, une bonne tenue à l'humidité, et qui en outre est d'un coût réduit. Le taux de liant contenu dans le primitif est généralement de l'ordre de 8 à 30 % en poids.

Ces résines phénoplastes sont par exemple une résine phénol-formaldéhyde de type résol modifiée ou non à l'urée présentant par exemple un rapport moléculaire formaldéhyde/phénol compris entre 1 et 5, catalysée en milieu basique avec des hydroxydes alcalins ou alcalino-terreux, la résine étant neutralisée en fin de cycle à pH7 par ajout d'acide sulfurique dilué. Avantageusement, on utilise une résine à pH d'environ 1,5 à 3 ou une résine à pH d'environ 8,5 à 12 que l'on prépare à partir de la résine de base à pH7 car ces résines montrent des caractéristiques de polymérisation encore plus intéressantes et notamment des températures de réticulation relativement basses, de l'ordre de 150 à 180 °C pour des durées de réticulation relativement brève, de l'ordre de 1 minute et demi à 2 minutes pour les épaisseurs et les grammages des matelas de fibres utilisés dans le cadre de l'invention.

La feuille de revêtement peut être à base d'un tissu ou d'un non tissé, en fibres naturelles ou synthétiques. Elle doit être poreuse ou perméable à l'air, d'une part pour permettre éventuellement le passage de l'air au moment du soufflage et, d'autre part pour qu'elle permette aux fibres de jouer leur rôle d'absorbant acoustique.

Elle doit être déformable pour pouvoir épouser parfaitement le profil du moule. Elle doit évidemment supporter les températures de moulage indiquées précédemment. En outre sa texture doit permettre la découpe et le scellement des bords.

Le stratifié à mouler peut encore comprendre une feuille de revêtement pour la face cachée ultérieurement du panneau. Cette feuille facilite la préhension du panneau, évite le contact direct des manipulateurs avec les fibres et peut aussi améliorer les caractéristiques de rigidité du panneau moulé.

Le stratifié à mouler peut encore comprendre d'autres éléments constitutifs tel un film thermoplastique qui, placé entre la feuille de revêtement apparent et le primitif, est utilisé en tant qu'adhésif pour améliorer la liaison entre les deux éléments. Bien entendu, dans ce cas le soufflage mis en œuvre selon l'invention est un soufflage semi-traversant. On peut substituer au film thermoplastique, une grille thermoplastique par exemple en polyéthylène qui elle autorise un soufflage traversant.

L'invention concerne encore un dispositif pour la mise en œuvre du procédé.

Le dispositif comprend une presse équipée de deux plateaux, l'un portant un moule et l'autre portant le contre-moule, au moins le moule ou le contre-moule opérant sur la face cachée du panneau présentant dans ses parties correspondant aux parties absorbantes des panneaux ou demi-panneaux, des orifices ou trous pour le passage de l'air chaud soufflé au cours du moulage, un système de soufflage d'air chaud relié aux orifices précédents, caractérisé en ce qu'il comprend, en outre, des couteaux pour la découpe du panneau au cours du moulage, des éléments de chauffage pour les parties contact du moule et contre-moule, c'est-à-dire les parties correspondant aux parties du panneau, notamment au voisinage des bords, et des moyens permettant de modifier le soufflage d'air chaud.

Dans une réalisation du dispositif mettant en œuvre un soufflage d'air chaud traversant, le moule et le contre-moule sont tous deux percés d'orifices, dans leurs parties correspondant aux parties épaisses des panneaux ou demi-panneaux à fabriquer.

Dans une variante mettant en œuvre un soufflage d'air chaud semi-traversant, seul le moule ou le contre-moule opérant sur la face cachée du panneau ou demi-panneau est percé de ces orifices pour le passage de l'air chaud.

Lorsque ces éléments de chauffage des parties contacts du moule et du contre-moule sont dans leur masse, ils peuvent être des résistances électriques, ou avantageusement des éléments à circulation d'un fluide caloporteur, tel de l'huile qui assurent une meilleure homogénéité de température dans ces parties contact.

Notamment pour la réalisation d'un panneau par moulage simultané de deux demi-panneaux à l'aide d'un même moule et lorsque ces demi-panneaux présentent des angles vifs entre les parties denses de faible épaisseur et les parties absorbantes de forte épaisseur, avantageusement le moule qui définit la forme intérieure du panneau est muni de moyens mécaniques tel une ou plusieurs ceintures en tube afin d'obtenir des formes bien accusées.

D'autres caractéristiques et avantages de l'invention apparaîtront dans la description suivante de réalisations de dispositifs selon l'invention.

La figure 1 représente dans une vue de plan, un panneau acoustique formé de deux demi-panneaux identiques.

La figure 2 représente le même panneau dans une vue de profil.

La figure 3 représente une partie d'un dispositif mettant en jeu un soufflage traversant.

La figure 4 représente le produit obtenu par la mise en oeuvre du dispositif de la figure 3.

La figure 5 représente le moule et le contre-moule d'un dispositif mettant en oeuvre un soufflage semi-traversant.

La figure 6 représente schématiquement un circuit de soufflage d'air, associé au moule et au contre-moule représenté sur la figure 5.

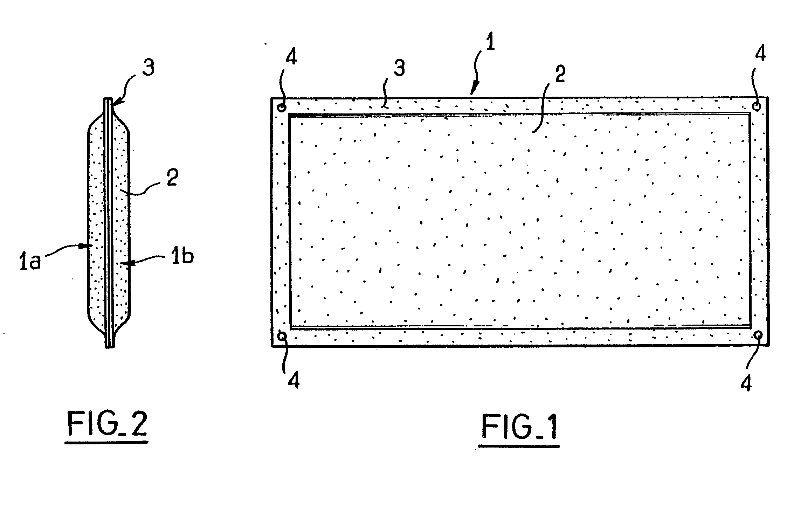

Les figures 1 et 2 représentent un panneau acoustique 1 rectangulaire d'environ 1200 mm de long sur 750 mm de large et de 120 mm d'épaisseur dans sa partie épaisse absorbante 2 et de 5 mm d'épaisseur dans ses parties denses périphériques 3, présentant 4 trous pour oeillets 4 aux quatre coins, utilisés pour la fixation du panneau lors de son utilisation. Ce panneau est formé de deux demi-panneaux identiques 1a, 1b. La composition du panneau sera décrite par la suite.

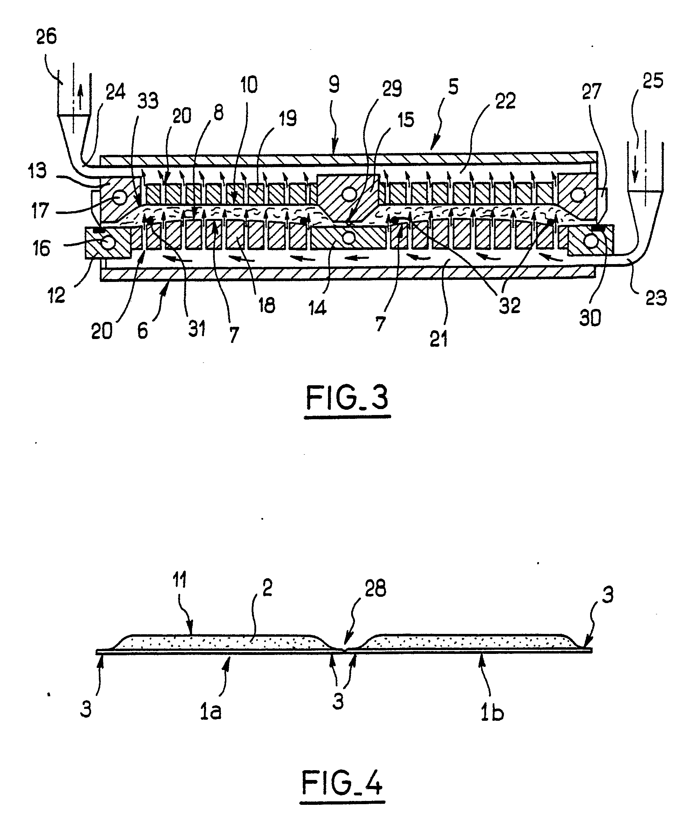

La figure 3 représente (en position de fermeture) un moule 5 pour la fabrication simultanée de deux demi-panneaux acoustiques 1a, 1b et présente donc une symétrie par rapport à un plan médian. La partie inférieure 6 constitue le moule proprement dit dont le profil 7 à courbure doublement convexe correspond à la face inférieure 8 des demi-panneaux. La partie supérieure 9 constitue le contre-moule dont le profil 10 à courbure doublement concave correspond à la face supérieure 11 des demi-panneaux qui sera la partie extérieure du panneau définitif obtenu par l'assemblage des deux demi-panneaux. Les bords 12, 13 et la partie centrale 14, 15 respectivement du moule et du contre-moule, correspondant aux parties denses des demi-panneaux, moulées par contact, comprennent des éléments de chauffage dans leur masse, par exemple des conduits 16 parcourus par un liquide caloporteur 17. Les parties 18 et 19 respectivement du moule et du contre-moule correspondant aux parties épaisses, absorbantes des demi-panneaux, sont percées de trous 20 permettant une circulation d'air chaud à travers les demi-panneaux. Ces trous sont reliés à des rainures longitudinales 21 et 22 prévues dans le moule et le contre-moule, reliées elles-mêmes à des buses de soufflage 23 ou d'aspiration 24 montées en bout de conduits d'alimentation 25 et 26 en air chaud. Des couteaux 27 sont montés sur la périphérie du contre-moule pour la découpe des demi-panneaux qui restent reliés entre eux par une ligne de jonctions 28 obtenue par un poinçon central 29. A l'aplomb des couteaux 27, le moule comprend une pièce 30 rapportée dans les bords, de dureté élevée, faisant office d'enclume pour la découpe. Sur le moule aux emplacements correspondant aux coins périphériques du panneau c'est-à-dire aux limites de la forte épaisseur, sont prévus des tubes 31, 32 formant deux ceintures qui au moment du moulage accentue dans les coins périphériques 33 la conformation du panneau au profit du contre-moule au cours de la phase de conformation par soufflage d'air.

Le moule est monté sur une table fixe d'une presse non représentée alors que le contre-moule est monté sur le plateau mobile verticalement, également non représenté, de cette même presse.

La figure 4 représente les deux demi-panneaux fabriqués par la mise en oeuvre du dispositif précédent, ces deux demi-panneaux restant liés suivant la ligne de jonction 28 faisant charnière.

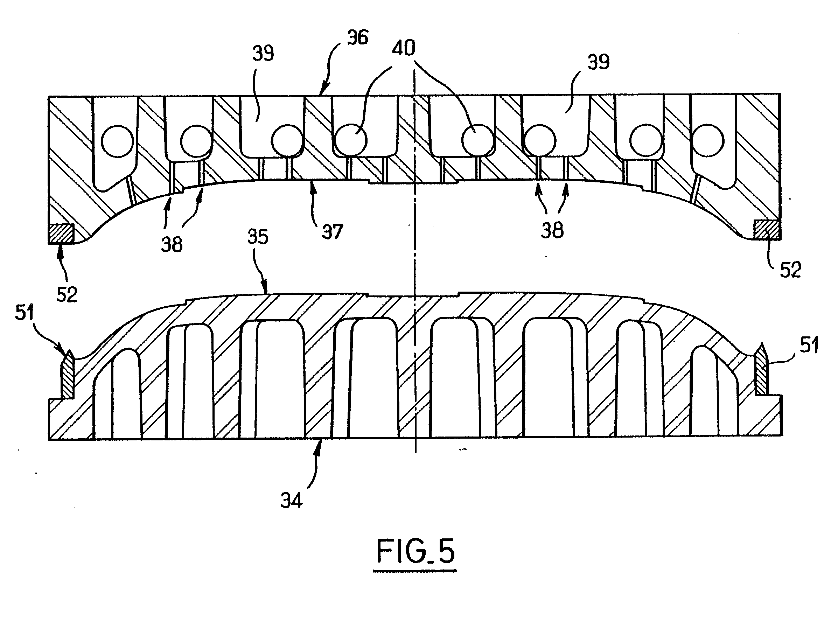

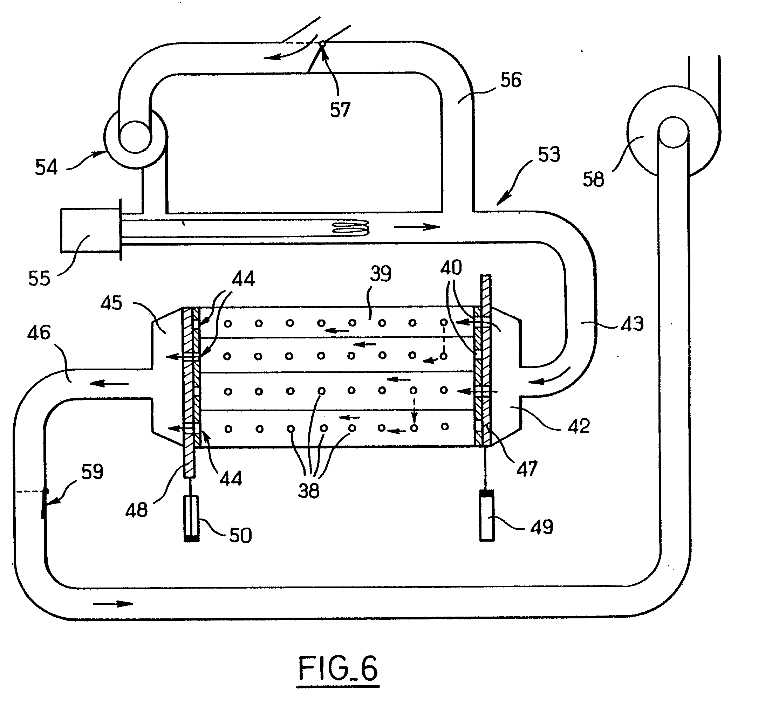

La figure 5 représente un moule (en position ouverte) dans une réalisation du dispositif selon l'invention mettant en oeuvre un soufflage semi-traversant et utilisé par exemple pour la fabrication d'une garniture intérieure de pavillon d'un véhicule à moteur. La partie inférieure 34 constituant le moule proprement dit présente un profil 35 conforme à la face du panneau (non représenté) apparente ultérieurement et qui est revêtue d'un tissu. La partie supérieure 36 constituant le contre-moule présente un profil 37 conforme à la face du panneau cachée ultérieurement. Le contre-moule 36 est percé de trous 38 répartis sur toute sa surface, à l'exception des bords. Ces trous 38 de quelques millimètres de diamètre prennent naissance dans le fond de rainures longitudinales 39 prévues dans la structure du contre-moule 36. Aux bouts de chaque rainure 39 sont prévus dans les parois latérales du contre-moule des orifices 40, de diamètre d'environ 50 millimètres qui peuvent être reliés à une buse 42 faisant partie du circuit d'alimentation en air représenté sur la figure 6, cette buse étant montée au bout d'un conduit d'arrivée 43 d'air. A l'autre bout de chaque rainure sont également prévus des orifices 44 qui peuvent être reliés à une autre buse 45, montée au bout d'un conduit d'évacuation 46 de cet air. Un système de répartition de l'air comprenant de chaque côté un tiroir 47 et 48 disposé entre les orifices 40, 44 et les buses 42 et 45 respectivement, comportant des trous pouvant être mis en coïncidence avec les orifices 40, 44 débouchant dans les rainures 39 répartit l'air soufflé ou aspiré dans une rainure sur deux, selon la position desdits tiroirs. Les tiroirs sont montés au bout des tiges des vérins 49 et 50 qui commandent leurs positions. Des couteaux 51 sont montés à la périphérie du moule pour la découpe du panneau simultanément au moulage, ces couteaux venant s'appuyer contre des enclumes 52, et présentant une forme adaptée pour le scellement simultané des bords.

Le circuit d'alimentation en air 53 représenté sur la figure 6 comprend les buses du soufflage 42 et d'aspiration 45 décrites précédemment montées au bout des conduits d'alimentation 43 et d'évacuation 46. Un ventilateur de soufflage 54 ainsi qu'un réchauffeur 55 sont montés sur le conduit d'alimentation. Le circuit d'alimentation comprend une partie dérivée de recyclage 56 qui permet d'accumuler l'air chaud durant l'ouverture du moule. L'air est introduit dans le circuit par une vanne à trois voies 57 qui selon sa position ouvre ou ferme la partie dérivée 56.

Un deuxième ventilateur 58 est monté sur le conduit d'évacuation 46 qui comporte un clapet commandé 59.

Le fonctionnement du dispositif sera décrit par la suite en relation avec un exemple de fabrication d'une garniture intérieure de pavillon.

Des exemples de fabrication selon l'invention de panneaux composites moulés sont décrits ci-après :

Exemple 1

On fabrique un panneau acoustique rectangulaire comme représenté sur les figures 1 et 2 de 1200 mm de long, 750 mm de large et de 120 mm d'épaisseur dans sa partie épaisse absorbante et de 5 mm d'épaisseur dans sa partie dense, présentant 4 trous pour oeillets aux quatre coins dans la partie dense, utilisée pour la fixation du panneau lors de son utilisation.

On amène au dispositif décrit en relation avec la figure 3 un primitif de fibres de verre présentant une masse surfacique de 1500 g/m² et une teneur de 17 % en poids d'un liant à base d'une résine phénoplaste.

Cette résine est du type résol modifié à l'urée présentant un rapport moléculaire formaldéhyde/phénol d'environ 3, catalysée en milieu basique et présentant un pH de 7.

Le primitif est recouvert d'une feuille de revêtement non tissé en coton et il repose sur un voile non tissé en polyester favorisant la manipulation. L'épaisseur du primitif est d'environ 150 mm.

L'ensemble est placé entre le moule et le contre-moule de la presse. Le moulage est effectué à butée pour obtenir les épaisseurs désirées. La durée du moulage est de 90 secondes.

Au cours du moulage les parties denses des deux demi-panneaux sont chauffées par contact avec les parties correspondantes du moule et du contre-moule, eux-mêmes chauffés à 200 °C dans leur masse par circulation d'huile à haute température. Les parties épaisses, absorbantes sont chauffées par soufflage d'air chaud à environ 200 °C avec un débit de 3 000 m³/h mesurés dans les conditions normales, d'abord par le dessous, c'est-à-dire du voile vers la feuille de revêtement apparente, durant 60 secondes, ce qui a pour effet de polymériser rapidement le liant et de conformer le panneau à la forme extérieure désirée, cette conformation étant encore accentuée par l'action mécanique des ceintures en tube 31, 32. On inverse ensuite le sens du soufflage d'air chaud durant les 30 secondes restantes ce qui accélère encore la polymérisation du liant et facilite le décollement de la face gonflée, du contre-moule. Au début de l'opération de moulage les couteaux extérieurs 27 découpent les bords des demi-panneaux tout en les scellant, alors qu'au centre du moule le plateau supérieur vient réaliser une ligne de jonction formant charnière. A la fin de l'opération de moulage, le contre-moule est soulevé, on retire les deux demi-panneaux dont la face cachée est légèrement creusée, et on les réunit ensuite par pliage autour de la ligne de jonction.

Le panneau obtenu présente un bel aspect, ses formes sont accentuées, le tissu de revêtement est intact, les bords et les trous pour œillets parfaitement scellés.

Les deux exemples suivants sont des exemples comparatifs dans lesquels on n'utilise pas toutes les phases de conformation et de soufflage selon l'invention.

### Exemple 1 Bis

On fabrique un panneau acoustique de la même façon que dans l'exemple 1 sauf qu'on n'inverse pas le sens de soufflage.

Le panneau obtenu, difficile à démouler, présente une forme correcte mais ses caractéristiques mécaniques, notamment la rigidité, ne sont pas satisfaisantes du fait d'une polymérisation incomplète du liant.

### Exemple 1 Ter

On fabrique un panneau acoustique de la même façon que dans l'exemple 1, sauf qu'on souffle d'abord dans l'autre sens, c'est-à-dire de la feuille de revêtement vers le voile, puis qu'on inverse ce sens de soufflage.

Le panneau obtenu présente une forme imparfaitement définie entre les parties épaisses et les parties minces.

### Exemple 2

On fabrique un panneau acoustique apte à être utilisé comme sous capot d'un véhicule à moteur d'environ 1400 mm de longueur et 900 mm de largeur, la partie absorbante ayant une épaisseur d'environ 40 mm et les parties minces une épaisseur d'environ 4 mm.

A cet effet, on utilise un primitif de fibres de verre présentant une masse surfacique de 1100 g/m² et une teneur de 17 % en poids d'un liant à base d'une résine phénoplaste comme décrit dans l'exemple 1. Le primitif est recouvert d'une feuille de revêtement en tissu aiguilleté pour la face qui sera visible ultérieurement et il repose sur une feuille en un non tissé pour la face qui sera cachée.

L'ensemble est placé dans le moule. La durée du pressage est de 80 secondes pendant lesquelles on souffle de l'air chaud à 240 °C avec un débit de 3000 m³/h, mesurés dans les conditions normales, vers la feuille de revêtement d'abord durant 45 secondes puis dans le sens opposé. Le sous-capot moulé présente les caractéristiques désirées.

### Exemple 3

On fabrique une garniture intérieure de pavillon de véhicule à moteur en utilisant le dispositif décrit en relation avec les figures 5 et 6.

On utilise un primitif de fibres de verre présentant une masse surfacique de 800 g/m² et une teneur de 15 % en poids d'un liant à base d'une résine phénoplaste comme décrit dans l'exemple 1 mais présentant un pH de 9,2. Le primitif est recouvert d'une feuille de revêtement en un tissu polyester après avoir interposé une feuille de chlorure de polyvinyle, et repose sur un tissu non tissé utilisée en tant que revêtement caché.

L'ensemble stratifié est placé dans le moule, la feuille de revêtement étant disposée face au moule 34. Après fermeture du moule, à l'aide de la vanne trois voies 57, on ferme le circuit de recyclage et on introduit de l'air dans le circuit d'alimentation par la mise en marche du ventilateur 54. Le circuit d'évacuation étant fermé par le clapet 59, il s'ensuit une mise sous pression dans le moule. Après environ 35 secondes, on ouvre le clapet 59 et après mise en marche du ventilateur 58 l'air chauffé par le réchauffeur 55 peut alors circuler dans le panneau composite en étant introduit par les orifices 40 dans une rainure sur deux du contre-moule et après passage dans le panneau composite s'échappant par les autres rainures, et les orifices 44 vers le circuit d'évacuation. Après 40 secondes de soufflage-aspiration, on modifie ce soufflage en actionnant simultanément les vérins 49 et 50 qui agissent sur les tiroirs 47 et 48 pour placer leurs trous en coïncidence avec les orifices 40 et 44 non utilisés précédemment. Le flux d'air est ainsi inversé dans le panneau composite. Après 40 secondes supplémentaires, on place la vanne trois voies en position de recyclage, on ferme le clapet 59, on ouvre le moule et on retire le panneau composite moulé qui présente un bel aspect et de bonnes propriétés mécaniques.

Les deux exemples suivants sont des exemples comparatifs hors invention.

### Exemple 3 Bis

On opère de la même façon que dans l'exemple 3 sauf qu'on ne modifie pas le soufflage. Après une durée de moulage identique à celle utilisée dans l'exemple 3, on obtient un panneau composite moulé qui ne présente pas une polymérisation homogène, en particulier au niveau des buses de soufflage où il existe des zones surchauffées alors qu'à d'autres emplacements, la polymérisation est insuffisante.

### Exemple 3 Ter

On opère de la même façon que dans l'exemple 3, sauf qu'on n'effectue pas une mise sous pression initiale. Le panneau moulé obtenu présente un aspect non satisfaisant et notamment des formes peu accentuées dans les coins.

**Revendications**

1. Procédé de fabrication par moulage d'un panneau composite (1) à épaisseur variable dans lequel on presse entre un moule (6, 34) et un contre-moule (9, 36) un ensemble stratifié comprenant un matelas de fibres contenant un liant non polymérisé et au moins une feuille de revêtement d'aspect, on conforme l'ensemble stratifié au profil du moule (6, 34) et du contre-moule (9, 36), on souffle de l'air chaud dans l'ensemble stratifié, caractérisé en ce que :

— on conforme l'ensemble stratifié au profil du moule (6, 34) ou du contre-moule (9, 36) par application de la feuille de revêtement d'aspect et de la partie adjacente du matelas de fibres contre le profil du moule ou du contre-moule correspondant à la face visible du panneau,

— on souffle de l'air chaud, au moins dans la partie épaisse (2) de l'ensemble stratifié, l'air chaud entrant du côté opposé à la feuille de revêtement d'aspect,

— on modifie le soufflage pour régulariser l'apport thermique nécessaire à une polymérisation homogène et accélérée du liant,

— tout en chauffant par contact les parties denses et minces (3) de l'ensemble stratifié.

2. Procédé selon la revendication 1, caractérisé en ce que la phase de conformation et la première phase de soufflage sont confondues.

3. Procédé selon une des revendications 1 ou 2, caractérisé en ce que la modification du soufflage consiste en une inversion du premier sens de soufflage.

4. Procédé selon une des revendications 1 à 3, caractérisé en ce que le soufflage est traversant.

5. Procédé selon une des revendications 1 à 3, caractérisé en ce que la phase de conformation consiste en une mise sous pression de l'ensemble stratifié par introduction d'air dans le moule.

6. Procédé selon la revendication 5, caractérisé en ce que la première phase de soufflage consiste en un soufflage semi-traversant, l'air chaud étant introduit par des orifices (38) du côté opposé à la feuille de revêtement d'aspect et s'échappant par d'autres orifices (38) de ce même côté opposé, et en ce que la seconde phase de soufflage consiste en une inversion des orifices de soufflage et d'aspiration.

7. Procédé selon une des revendications 1 à 6, caractérisé en ce que la durée totale de la phase de conformation et des phases de soufflage est inférieure à 2 mn 30.

8. Procédé selon une des revendications 1 à 7, caractérisé en ce qu'on accentue la forme extérieure des panneaux composites à l'aide de moyens mécaniques tels des ceintures en tube.

9. Procédé selon une des revendications 1 à 8, caractérisé en ce qu'on scelle les bords des panneaux durant l'opération de moulage.

10. Procédé selon une des revendications 1 à 9, caractérisé en ce qu'il s'applique à la fabrication de panneaux présentant une symétrie par rapport à leur plan principal et qu'on réalise alors deux demi-panneaux (1a, 1b) simultanément à partir d'un même stratifié.

11. Procédé selon la revendications 10, caractérisé en ce qu'on garde une liaison entre les deux demi-panneaux.

12. Procédé selon une des revendications 1 à 11, caractérisé en ce que la phase de conformation et la première phase de soufflage ont ensemble une durée suffisante pour figer le panneau dans sa forme définitive.

13. Procédé selon une des revendications 1 à 12, caractérisé en ce que l'air soufflé a une température de l'ordre de 150° à 300 °C et que son débit est de l'ordre de 1 000 à 10 000 m³/heure.

14. Dispositif de moulage pour la mise en oeuvre de procédé selon une des revendications 1 à 13, comprenant une presse équipée de deux plateaux, l'un portant un moule (6, 34) et l'autre portant le contre-moule (9, 36), au moins le moule (6, 34) ou le contre-moule (9, 36) opérant sur la face cachée du panneau présentant dans ses parties correspondant aux parties absorbantes des panneaux ou demi-panneaux, des orifices ou trous (20, 38) pour le passage de l'air chaud soufflé au cours du moulage, un système de soufflage d'air chaud relié aux orifices précédents, caractérisé en ce qu'il comprend, en outre, des couteaux (27, 51) pour la découpe du panneau au cours du moulage, des éléments de chauffage (16) pour les parties contact du moule et contre-moule, c'est-à-dire les parties correspondant aux parties du panneau, notamment au voisinage des bords, et des moyens permettant de modifier le soufflage d'air chaud.

15. Dispositif selon la revendication 14, caractérisé en ce que le moule et le contre-moule sont tous deux percés d'orifices pour le passage de l'air, ces orifices (20, 38) prenant naissance dans des rainures (21, 22, 39) mises en communication avec le système de soufflage d'air chaud (53).

16. Dispositif selon la revendication 14, caractérisé en ce que seul le moule ou le contre-moule est percé d'orifices pour le passage de l'air, ces orifices (20, 38) prenant naissance dans des rainures (21, 22, 39) mises en communication avec un système de répartition de l'air.

17. Dispositif selon la revendication 16, caractérisé en ce que le système de répartition de l'air comprend deux tiroirs (47, 48) percés de trous pouvant être mise en coïncidence ou non avec des orifices (40, 44) prévus des deux côtés du moule et du contre-moule au bout des rainures (39).

18. Dispositif selon une des revendications 14 à 17, caractérisé en ce que dans les parties contact sont prévus des conduits de chauffage (16) dans lesquels circule un liquide caloporteur (17).

19. Dispositif selon une des revendications 14 à 18, caractérisé en ce que les couteaux (27, 51) présentent une forme adaptée pour le scellement des bords découpés.

**Claims**

1. Method of producing a composite panel (1) of variable thickness by moulding, in which a laminated assembly comprising a mat of fibres containing a non polymerised binder and at least one aesthetic surfacing sheet is pressed between a mould (6, 34) and a counter mould (9, 36), the laminated package being adapted to the profile of the mould (6, 34) and counter mould (9, 36), hot air then being blown into the laminated assembly, characterised in that :

— the laminated assembly or package is shaped to the profile of the mould (6, 34) or of the counter mould (9, 36) by the application of the aesthetic surfacing sheet and of the adjacent part of the mat of fibres against the profile of the mould or of the counter mould corresponding to the visible face of the panel,

— hot air is blown at least into the thick part (2) of the laminated assembly, the hot air entering from the side opposite the aesthetic surfacing sheet,

— the blowing is modified to regularise the supply of heat necessary to an homogeneous and accelerated polymerisation of the binder,

— while at the same time providing for contact heating of the dense and thin parts (3) of the laminated assembly.

2. Method according to Claim 1, characterised in that the shaping phase and the first blowing phase are coincident.

3. Method according to one of Claims 1 or 2, characterised in that the modification of the blowing consists in a reversal of the first direction of blowing.

4. Method according to one of Claims 1 to 3, characterised in that through-flow blowing is employed.

5. Method according to one of Claims 1 to 3, characterised in that the conformation or shaping phase consists in applying pressure to the laminated assembly by the introduction of air into the mould.

6. Method according to Claim 5, characterised in that the first blowing phase consists of a semi through flow blowing phase, the hot air being introduced through orifices (38) on the side opposite the aesthetic surfacing sheet and escaping through other orifices (38) on this same opposite side, and in that the second blowing phase consists of a reversal of the blowing-in inlets and extraction orifices.

7. Method according to one of Claims 1 to 6, characterised in that the total duration of the shaping phase and of the blowing phases is less than 2 mins 30 secs.

8. Method according to one of Claims 1 to 7, characterised in that the exterior form of the composite panels is accentuated by mechanical means such as tubular belts.

9. Method according to one of Claims 1 to 8, characterised in that the edges of the panels are sealed during the moulding operation.

10. Method according to one of Claims 1 to 9, characterised in that it is applied to the production of panels exhibiting symmetry in respect of their main plane and in that two half-panels (1a,

1b) are then produced simultaneously from one and the same laminated product.

11. Method according to Claim 10, characterised in that a connection is maintained between the two half-panels.

12. Method according to one of Claims 1 to 11, characterised in that the shaping phase and the first blowing phase are together of sufficient duration to fix the panel in its final form.

13. Method according to one of Claims 1 to 12, characterised in that the blown air is at a temperature of around 150° to 300 °C, its rate of flow being approx. 1000 to 10000 cu.m./hour.

14. Moulding apparatus for carrying out the method according to one of Claims 1 to 13, comprising a press equipped with two platens, one carrying a mould (6, 34) and the other carrying the counter mould (9, 36), at least the mould (6, 34) or the counter mould (9, 36) operating on the concealed face of the panel having in its parts corresponding to the absorbent parts of the panels or half-panels orifices or holes (20, 38) for the passage of the hot air blown during the course of moulding, a hot air blower system being connected to the aforesaid orifices, characterised in that it comprises in addition knives (27, 51) for cutting the panel during the course of moulding, heating elements (16) for heating the contact parts of the mould and counter mould, that is to say the parts corresponding to the parts of the panel, particularly in the vicinity of the edges, and the means which enable the blowing of hot air to be modified.

15. Apparatus according to Claim 14, characterised in that the mould and the counter mould are both provided with orifices for the passage of air, the said orifices (20, 38) originating in grooves (21, 22, 39) communicating with the hot air blowing system (53).

16. Apparatus according to Claim 14, characterised in that only the mould or the counter mould is provided with orifices for the passage of air, the said orifices (20, 38) originating in grooves (21, 22, 39) communicating with an air distribution system.

17. Apparatus according to Claim 16, characterised in that the air distribution system comprises two slide valves (47, 48) provided with holes and adapted to be made to coincide or not with orifices (40, 44) provided on both sides of the mould and of the counter mould at the end of the grooves (39).

18. Apparatus according to one of Claims 14 to 17, characterised in that the contact parts are provided with heating ducts (16) in which a heat-carrying liquid (17) circulates.

19. Apparatus according to one of Claims 14 to 18, characterised in that the knives (27, 51) are of a form which is suitable for sealing the cut edges.

**Patentansprüche**

1. Verfahren zur Herstellung einer Verbundplatte (1) mit veränderlicher Dicke mittels Formen, bei dem zwischen einer Form (6, 34) und einer Gegenform (9, 36) eine geschichtete Anordnung gepreßt wird, die eine ein nicht-polymerisiertes Bindemittel aufweisende Fasermatte und wenigstens einen Verkleidungsüberzug aufweist, die Schichtanordnung der Form (6, 34) und der Gegenform (9, 36) angepaßt wird, warme Luft in die Schichtanordnung eingeblasen wird, dadurch gekennzeichnet,

daß die Schichtanordnung dem Profil der Form (6, 34) oder der Gegenform (9, 36) durch Aufbringen des Verkleidungsüberzugs und des der Fasermatte naheliegenden Bereichs gegen das Profil der Form oder der Gegenform angepaßt wird, das der sichtbaren Oberseite der Platte entspricht,

daß wenigstens in den verstärkten Bereich (2) der Schichtanordnung warme Luft eingeblasen wird, wobei die warme Luft an der dem Verkleidungsüberzug gegenüberliegenden Seite eintritt,

daß zum Regeln der für eine homogene und beschleunigte Polymerisation des Bindemittels notwendigen Wärmezufuhr das Einblasen verändert wird,

während die dichten und schlanken (3) Bereiche der Schichtanordnung durch Berührung erwärmt werden.

2. Verfahren nach Anspruch 1, dadurch gekennzeichnet, daß die Phase des Anpassens bzw. Bildens und die erste Einblasphase miteinander vermischt werden.

3. Verfahren nach einem der Ansprüche 1 oder 2, dadurch gekennzeichnet, daß die Veränderung des Einblasens in einer Umkehr der ersten Einblasrichtung besteht.

4. Verfahren nach einem der Ansprüche 1 bis 3, dadurch gekennzeichnet, daß das Einblasen quer hindurchläuft.

5. Verfahren nach einem der Ansprüche 1 bis 3, dadurch gekennzeichnet, daß die Phase der Bildung aus einem Unterdrucksetzen der Zchichtanordnung durch Einführen von Luft in die Form besteht.

6. Verfahren nach Anspruch 5, dadurch gekennzeichnet, daß die erste Einblasphase aus einem halbdurchsetzenden Einblasen besteht, wobei die warme Luft durch Öffnungen (38) an der dem Verkleidungsüberzug gegenüberliegenden Seite eingebracht wird und durch andere Öffnungen (38) derselben gegenüberliegenden Seite wieder austritt, und daß die zweite Einblasphase aus einer Umkehrung der Einblas- und Absaugöffnungen besteht.

7. Verfahren nach einem der Ansprüche 1 bis 6, dadurch gekennzeichnet, daß die Gesamtzeit der Bildungphase und der Einblasphasen kleiner ist als 2 min 30.

8. Verfahren nach einem der Ansprüche 1 bis 7, dadurch gekennzeichnet, daß die äußere Form der Verbundplatten mit Hilfe von mechanischen Einrichtungen wie rohrförmigen Ringen hervorgehoben wird.

9. Verfahren nach einem der Ansprüche 1 bis 8, dadurch gekennzeichnet, daß die Plattenränder während des Formungsvorganges versiegelt werden.

10. Verfahren nach einem der Ansprüche 1 bis 9, dadurch gekennzeichnet, daß es zur Herstellung von Platten anwendbar ist, welche eine Symmetrie bezüglich der Hauptebene aufweisen, und daß zwei Halbplatten (1a, 1b) gleichzeitig aus derselben Schicht erzeugt werden können.

11. Verfahren nach Anspruch 10, dadurch gekennzeichnet, daß eine Verbindung zwischen den beiden Halbplatten aufrechterhalten wird.

12. Verfahren nach einem der Ansprüche 1 bis 11, dadurch gekennzeichnet, daß die erste Phase der Bildung und die erste Phase des Einblasens zusammen eine ausreichende Dauer aufweisen, um die Platte in ihrer endgültigen Form erstarren zu lassen.

13. Verfahren nach einem der Ansprüche 1 bis 12, dadurch gekennzeichnet, daß die eingeblasene Luft eine Temperatur in der Größenordnung von 150° bis 300 °C aufweist und seine Ausstoßrate in der Größenordnung von 1.000 bis 10.000 $m^3$/pro Stunde liegt.

14. Formungsvorrichtung zur Durchführung des Verfahrens nach einem der Ansprüche 1 bis 13, mit einer mit zwei Platten versehenen Presse, wobei eine eine Form (6, 34) und die andere eine Gegenform (9, 36) trägt, wobei wenigstens die Form (6, 34) oder die Gegenform (9, 36) auf die verdeckte Oberfläche der Platte wirkt, welche in den den Absorbierungsbereichen der Platten oder Halbplatten entsprechenden Bereichen Öffnungen oder Löcher (20, 38) für den Durchtritt von warmer Luft aufweist, welche während des Formens eingeblasen wird, ein Einblassystem von warmer Luft vorgesehen ist, welches mit den vorhergehenden Öffnungen verbunden ist- dadurch gekennzeichnet, daß sie u.a. Messer (27, 51) zum Schneiden der Platte während des Formens, Heizelemente (16) für die Berührungsbereiche der Form und Gegenform, d.h. der den Bereichen der Platte entsprechenden, insbesondere in der Nähe der Ränder entsprechenden Bereiche, und Einrichtungen aufweist, die ein Verändern des Einblasens von warmer Luft erlauben.

15. Vorrichtung nach Anspruch 14, dadurch gekennzeichnet, daß die Form und die Gegenform beide mit Öffnungen für das Hindurchtreten von Luft durchsetzt sind, wobei die Öffnungen (20, 38) in Kerben (21, 22, 39) beginnen, die mit dem System zum Einblasen von warmer Luft (53) in Verbindung stehen.

16. Vorrichtung nach Anspruch 14, dadurch gekennzeichnet, daß allein die Form oder die Gegenform mit Öffnungen für das Hindurchtreten von Luft versehen ist, wobei die Öffnungen (20, 38) in Kerben (21, 22, 39) beginnen, die in Verbindung mit einem Luftverteilungssystem stehen.

17. Vorrichtung nach Anspruch 16, dadurch gekennzeichnet, daß das Luftverteilungssystem zwei mit Löchern durchsetzte Schächte (47, 48) aufweist, welche in Übereinstimmung oder auch nicht mit Öffnungen (40, 44) gebracht werden können, die in zwei Seiten der Form und der Gegenform am Ende der Kerben (39) angeordnet sind.

18. Vorrichtung nach einem der Ansprüche 14 bis 17, dadurch gekennzeichnet, daß in den Berührungsbereichen Heizleitungen (16) vorgesehen sind, in denen eine Wärmetransportflüssigkeit (17) zirkuliert.

19. Vorrichtung nach einem der Ansprüche 14 bis 18, dadurch gekennzeichnet, daß die Messer (27, 51) eine Form aufweisen, die für das Versiegeln der abgeschnittenen Ränder geeignet ist.

FIG. 2

FIG. 1

0 124 387

FIG. 3

FIG. 4

FIG_5

0 124 387

FIG_6

0 124 387